# EUROPEAN PATENT APPLICATION

(11) **EP 4 628 237 A1**
(43) Date of publication of application: **08.10.2025**
(21) Application number: 23895641.1
(22) Date of filing: 09.01.2023
(51) Int. Cl.: B23H 1/04, B23H 1/06, B23H 3/06, B23H 3/08, B23H 7/22, B23H 7/24, B23H 11/00

(54) **ELECTRODE WIRE FOR ELECTRIC SPARK DISCHARGE MACHINING, AND PREPARATION METHOD THEREFOR**

(30) Priority: 29.11.2022 CN 202211511418
(71) Applicant: Ningbo Boway Alloy Hightech Wire Co., Ltd., Ningbo, Zhejiang 315000 (CN)
(72) Inventor: WU, Tong, Ningbo, Zhejiang 315000 (CN); LIANG, Zhining, Ningbo, Zhejiang 315000 (CN); LUO, Xiaoqi, Ningbo, Zhejiang 315000 (CN); LIN, Huogen, Ningbo, Zhejiang 315000 (CN); CHEN, Yibo, Ningbo, Zhejiang 315000 (CN); GUO, Fanglin, Ningbo, Zhejiang 315000 (CN); WANG, Gangliang, Ningbo, Zhejiang 315000 (CN)
(74) Representative: Metida
(86) International application number: PCT/CN2023/071404
(87) International publication number: WO 2024/113465

(57) **Abstract**

An electrode wire for electrical discharge machining and a preparing method thereof. The electrode wire comprises: a core material (1); an intermediate layer (2) located externally to the core material (1); and a surface layer (3) located externally to the intermediate layer (2). Wherein, the material of the core material (1) is a metal or an alloy, and the material of the intermediate layer (2) is a copper-zinc alloy. The intermediate layer (2) has pits (20) on its surface, and the pit (20) has micro-pits (200) on its surface. The size of the micro-pit (200) is smaller than that of that of the pit (20) on which the micro-pit located. The surface layer (3) discontinuously covers the exterior of the intermediate layer (2) and fills the pits (20) and micro-pits (200). During the preparing process, the copper-zinc alloy is formed inside the electrode wire through electroplating, heat treatment, and drawing processes, while pits (20) and micro-pits (200) are formed on the surface of the intermediate layer (2) via extrusion.

## Description

### TECHNICAL FIELD

The present disclosure relates to the field of wire cut electrical discharge machining, and more particularly, to an electrode wire for electrical discharge machining and a preparing method thereof.

### BACKGROUND

The fundamental working principle of wire cut electrical discharge machining (abbreviated as WEDM) is to utilize a continuously moving thin metal wire (referred to as an electrode wire) as an electrode, which erodes metal through pulsed spark discharges and performs cutting and shaping on a workpiece.

Wire cut electrical discharge machining processes workpieces based on the discharge principle of electrical sparks. Prior to machining, the workpiece is connected to the positive pole of a pulse power supply, while the electrode wire is connected to the negative pole of a high-frequency pulse power supply as the tool electrode, utilizing spark discharges to cut the workpiece. The pulse power supply provides the machining energy, and a dedicated WEDM working fluid is applied during the process to remove debris generated from machining. Under the action of a strong electric field, the cathode and anode surfaces are respectively bombarded by electron flow and ion flow, resulting in the formation of an instantaneous high-temperature heat source within the electrode gap. This causes local melting and vaporization of metal, thereby creating etching pits on both the electrode wire and the workpiece. Following vaporization, the working fluid and workpiece material vapor instantaneously expand rapidly. Under the combined action of this thermal expansion and the flushing by the working fluid, the molten and vaporized workpiece material is ejected from the discharge channel, thereby completing a single spark discharge process. When the next pulse arrives, the afore-mentioned spark discharge process repeats, ultimately shaping the workpiece through cutting.

Cutting speed, cutting accuracy, and surface roughness of the workpiece after machining are evaluation metrics for the quality of the WEDM process, and each of these metrics is significantly related to the performance of the electrode wire adopted.

To achieve higher cutting speed, certain prior art techniques deposit a high-zinc alloy layer with elevated zinc content on the electrode wire surface. By leveraging zinc's low sublimation temperature, a high discharge-induced vaporization pressure is attained during machining, thereby increasing the cutting speed.

To increase cutting speed, other prior art techniques utilize processes such as drawing to form cracks on the electrode wire surface. These cracks increase the contact area between the electrode wire surface and the working fluid, enhancing the flushing efficiency of the working fluid on the electrode wire. Consequently, the cooling effect on the electrode wire is improved, and the duration of a single spark discharge is shortened. This increases the number of spark discharges per unit time, increasing the speed of WEDM. Simultaneously, sharp edges formed at the crack boundaries facilitate easier discharge, further increasing the WEDM speed.

However, as the WEDM process progresses, the electrode wire surface gradually depletes. The high-zinc alloy layer and the crack structures on the surface diminish over time. Consequently, the vaporization effect of the high-zinc surface metal and the functional role of the cracks are reduced, leading to a corresponding decrease in cutting speed.

### SUMMARY

The present disclosure provides an electrode wire for electrical discharge machining and its manufacturing method, aiming to solve the problem of reduced cutting speed caused by gradual consumption of the electrode wire in prior art.

The present invention adopts the following technical solution:
an electrode wire for electrical discharge machining comprises: a core material; an intermediate layer located externally to the core material; and a surface layer located externally to the intermediate layer; wherein the material of the core material is a metal or an alloy, and the material of the intermediate layer is a copper-zinc alloy; wherein the surface of the intermediate layer has pits on its surface, the pit has micro-pits on its surface, the size of the micro-pit is smaller than that of the pit on which the micro-pit located, and the surface layer discontinuously covers the exterior of the intermediate layer and fills the pits and micro-pits.

The present invention provides the following beneficial effects:
1, When the electrode wire is applied in wire cut electrical discharge machining, as the process proceeds, the surface layer of the electrode wire is gradually consumed by discharge-induced etching, exposing the intermediate layer of the electrode wire. The surface of the intermediate layer features pits, and the surface of each pit contains micro-pits. After the surface layer is preferentially consumed by discharge erosion during machining, the exposed surface area of the intermediate layer increases. Consequently, during flushing and cooling of the electrode wire by the working fluid, the contact area between the electrode wire surface and the working fluid is significantly augmented. This enhances the flushing and cooling efficiency of the working fluid on the electrode wire, shortens the duration of individual spark discharges (i.e. increases the spark times per unit time), and thereby increases the speed of wire cut electrical discharge machining.
2, Tips form at the open edges of the pits and micro-pits where discharge occurs more readily. Consequently, during wire cut electrical discharge machining, the reaction time for spark generation is reduced, thereby accelerating the cutting speed.
3, As the surface layer discontinuously covers the intermediate layer, tips also form at discontinuities regions of the surface layer. Discharge occurs more readily at these tips, thereby reducing the reaction time for spark generation during wire cut electrical discharge machining and thus accelerating cutting speed.

Preferably, the thickness of the intermediate layer is 1-50 µm, and the thickness of the surface layer is 0.1-20 µm. During preparing, the thickness of the surface layer forming at last and that of the intermediate layer forming at last correlate with the thickness of the zinc coating layer. An excessively thin zinc coating layer fails to function as a functional layer, while an excessively thick zinc coating layer prevents the outermost zinc coating layer from participating in the alloying reaction. The aforementioned ranges represent suitable thicknesses for the surface layer and the intermediate layer resulting from an appropriately thick zinc coating layer.

Preferably, the thickness of the intermediate layer is 5-40 µm, and the thickness of the surface layer is 0.1-15 µm. Specifically, the thickness of the intermediate layer may be 5-30 µm, 10-40 µm, 10-30 µm, or 20-30 µm; and the thickness of the surface layer may be 0.1-10 µm, 1-15 µm, 1-10 µm, 5-15 µm, or 5-10 µm.

Preferably, along the radial direction of the electrode wire, the depth of the pit is 0.1-20 µm, and the depth of the micro-pit is 0.05-10 µm. When exposed to the working fluid, the pit and micro-pit of the aforementioned sizes ensure a sufficiently large contact area between the electrode wire and the working fluid, while guaranteeing that the tips formed at the edges of the pits and micro-pits have an effective tip discharge effect, thereby increasing the speed of wire cut electrical discharge machining.

Preferably, along the radial direction of the electrode wire, the depth of the pit is 0.1-10 µm, and the depth of the micro-pit is 0.05-5 µm. Specifically, along the radial direction of the electrode wire, the depth of the pit may be 0.5-10 µm, 1-10 µm, 0.5-5 µm, or 1-5 µm; and the depth of the micro-pit may be 0.05-3 µm, 0.05-2 µm, 0.05-1 µm, 0.1-5 µm, 0.1-3 µm, 0.1-2 µm, or 0.1-1 µm. Preferably, the surface layer contains carbon element and zinc element. The zinc element ensures excellent vaporization and flushing effects in the surface layer, increasing cutting speed; the presence of the carbon element not only increases the conductivity of the electrode wire-thereby increasing cutting speed-but also elevates the hardness of the surface layer, facilitating the formation of pits and micro-pits on the intermediate layer surface.

Preferably, by mass percent, the carbon content in the surface layer is ≥0.5%, and the zinc content in the surface layer is ≥60%. The afore-mentioned composition guarantees sufficient zinc element and carbon element in the surface layer, enabling these components to function optimally. Preferably, the intermediate layer further has cracks on it. Similarly to the foregoing principle, tips form at the cracks, where discharge occurs more readily. Consequently, during wire cut electrical discharge machining, the reaction time for spark generation is reduced, thereby accelerating the cutting speed. Additionally, the cracks function analogously to the afore-mentioned pits by increasing the contact area between the electrode wire and the working fluid, thus increasing cutting speed. Therefore, after the surface layer is consumed, the pits, micro-pits, and cracks in the intermediate layer further accelerate cutting speed.

Preferably, the intermediate layer and/or the core material are exposed at discontinuous regions of the surface layer. The exposed intermediate layer or core material enhances the conductivity of the surface layer, facilitates the transmission of discharge energy, and thereby further increases cutting speed. Simultaneously, the exposure of the intermediate layer or core material creates discontinuities in the surface layer. As previously described, such discontinuities enhance cutting speed.

Preferably, the material of the core material is copper or a copper alloy.

To solve the afore-mentioned technical problem, the present invention also adopts the following technical solution:
A method for manufacturing an electrode wire for electrical discharge machining comprises:
S100: providing a mother-bar made of pure copper or a copper alloy;
S101: electroplating zinc on the surface of the mother-bar, and the electroplating solution comprises and additive, thereby forming a zinc coating layer on the surface of the mother-bar to obtain a first wire blank; wherein the additive comprises a saccharide organic compound, and the electroplating current density range is 5-150 A/dm²;
S102: heat-treating the first wire blank, wherein the copper element in the mother-bar and the zinc element in the zinc coating layer interdiffuse during the heat treatment to form an intermediate layer, thereby obtaining a second wire blank; from inside to outside, the second wire blank sequentially comprises a core material, an intermediate layer, and a surface layer;
S103: subjecting the second wire blank to drawing and stress relief annealing to obtain a finished electrode wire. By applying the afore-mentioned preparing method of the present invention, since the electroplating solution comprises the saccharide organic compound, this compound can be absorbed onto the crystal surfaces of the mother-bar and the zinc coating layer, retarding the reduction reaction of zinc ions. This results in slowing the crystallization of the zinc coating layer and refining its grains, thereby imparting a brittle-hard characteristic to the electrodeposited zinc coating layer. Meanwhile, in this preparing method, the electroplating current density is controlled within 5-150 A/dm², and within this current density range, the grains of the zinc coating layer further refine, and a greater amount of saccharide organic compound is adsorbed onto the crystal surface the zinc coating layer, enhancing its efficacy in retarding zinc ion reduction and ultimately obtaining a denser, more brittle-hard zinc coating layer. During subsequent heat treatment, an alloying reaction occurs between the zinc coating layer and the mother-bar. **In** this process, the saccharide organic compound between grains reacts with copper and zinc elements to form harder mixtures and oxides containing copper, zinc, carbon, and other elements. Structurally, this manifests as irregular micro-particles distributed on the interlayer-facing side of the surface layer transformed from the zinc coating layer. After die drawing, the surface layer develops cracks and the cracks distribute in blocky or flaky structures outside the intermediate layer. Consequently, the brittle-hard mixtures and oxides are pressed into the intermediate layer in blocky or flaky forms, creating pits. Simultaneously, irregular tiny particles compress against the inner surfaces of these pits to form micro-pits. Thus, within the finished electrode wire, the intermediate layer contains pits and micro-pits that increase its surface area, making it have better flushing effects. Moreover, the exposed edges of these pits and micro-pits form sharp edges that facilitate electrical discharge, thereby increasing cutting efficiency during wire cut electrical discharge machining processes.

Preferably, in step S102, the heat treatment temperature is 300-500°C, the heat treatment duration is 1-50 h, and the material of the intermediate layer formed comprises a β-phase copper-zinc alloy and/or a β'-phase copper-zinc alloy. The β-phase copper-zinc alloy or the β'-phase copper-zinc alloy has higher conductivity, which improves discharge efficiency and thereby enhances cutting speed.

To solve the afore-mentioned technical problem, the present invention further adopts the following technical solution:
A method for manufacturing an electrode wire for electrical discharge machining, comprises:
S200: providing a mother-bar made of pure copper or copper alloy;
S201: electroplating zinc on the surface of the mother-bar, wherein an electroplating solution comprises an additive, thereby forming a zinc coating layer on the surface of the mother-bar to obtain a first wire blank; wherein the additive comprises a saccharide organic compound, and the electroplating current density range is 5-150 A/dm²;
S202: heat-treating the first wire blank, wherein the copper element from the mother-bar and the zinc element from the zinc plating layer interdiffuse during the heat treatment to form a copper-zinc alloy layer, thereby obtaining a second wire blank; from inside to outside, the second wire blank sequentially comprises a core material, a copper-zinc alloy layer, and a surface layer;
S203: drawing the second wire blank to obtain a third wire blank;
S204: heat-treating the third wire blank to obtain a fourth wire blank; from inside to outside, the fourth wire blank sequentially comprises a core material, an intermediate layer, and a surface layer; S205: subjecting the fourth wire blank to drawing and stress relief annealing to obtain a finished electrode wire.

Similarly to the foregoing principle, the unique electroplating process enables the intermediate layer within the finished electrode wire to contain pits and micro-pits, thereby increasing cutting speed.

Preferably, in step S202, the heat treatment temperature is 100-250°C, the heat treatment duration is 3-20 h, and the material of the copper-zinc alloy layer formed comprises a γ-phase copper-zinc alloy. After plating, a lower heat treatment temperature is first utilized to alloy and form the γ-phase copper-zinc alloy. Due to the hardness of the γ-phase copper-zinc alloy, it fractures and generates cracks during subsequent drawing. The electric field formed between the electrode wire and the workpiece also has difference in strength. At locations where cracks form, the electric field is further enhanced, thereby prioritizing discharge generation at the crack edges. Compared to an intermediate layer without cracks, applying an electrode wire with this cracked intermediate layer reduces the reaction time for spark generation, thus accelerating the speed of wire cut electrical discharge machining. Simultaneously, similarly to the afore-mentioned pits and micro-pits, the cracks also increase the contact area between the intermediate layer and the working fluid. Preferably, in step S204, the heat treatment temperature is 300-550°C, the heat treatment duration is 1-50 h, and the material of the intermediate layer formed comprises a β-phase copper-zinc alloy and/or a β'-phase copper-zinc alloy. The heat treatment transforms the γ-phase copper-zinc alloy into a β-phase copper-zinc alloy and/or a β'-phase copper-zinc alloy, such that the β-phase or the β'-phase copper-zinc alloy serving as the intermediate layer in final contains both pits and cracks. Additionally, the β-phase copper-zinc alloy and the β'-phase copper-zinc alloy have superior electrical conductivity compared to the γ-phase copper-zinc alloy, further increasing cutting speed. To solve the afore-mentioned technical problem, the present invention further adopts the following technical solution:
A method for manufacturing an electrode wire for electrical discharge machining, comprises:
S300: providing a mother-bar made of pure copper or a copper alloy;
S301: electroplating zinc on the surface of the mother-bar, wherein an electroplating solution comprises an additive, thereby forming a zinc plating layer on the surface of the mother-bar to produce a first wire blank; wherein the additive is a saccharide organic compound, and the electroplating current density range is 5-150 A/dm²;
S302: drawing the first wire blank to obtain a second wire blank;
S303: heat-treating the second wire blank, wherein the copper element from the mother-bar and the zinc element from the zinc plating layer interdiffuse during the heat treatment to form an intermediate layer, thereby obtaining a third wire blank; from inside to outside, the third wire blank sequentially comprises a core material, an intermediate layer, and a surface layer;
S304: subjecting the third wire blank to drawing and stress relief annealing to obtain a finished electrode wire.

Similarly to the foregoing principle, the unique electroplating process enables the intermediate layer within the finished electrode wire to contain pits and micro-pits, thereby increasing cutting speed. Furthermore, since drawing is performed immediately after electroplating, the dense and brittle zinc coating layer is prone to fracture, allowing the mother-bar inside to extrude through the zinc coating layer. Consequently, in the finished electrode wire, the core material and the intermediate layer readily extrude through the surface layer. The core material and the intermediate layer have higher conductivity, which improves discharge efficiency and thereby increases cutting speed.

In step S303, the heat treatment temperature is 200-500°C, the heat treatment duration is 1-50 h, and the material of the intermediate layer formed comprises at least one of the following materials: a β-phase copper-zinc alloy, a β'-phase copper-zinc alloy and a γ-phase copper-zinc alloy. By adopting different process parameters in step S303, the intermediate layer in the finished electrode wire manifests different phases. On one hand, the β-phase copper-zinc alloy and the β'-phase copper-zinc alloy are softer, so during subsequent drawing, they are more easily compressed to form pits and micro-pits, significantly enhancing the flushing effect. On the other hand, the β-phase copper-zinc alloy and the β'-phase copper-zinc alloy have better conductivity which improves discharge efficiency and thus increases cutting speed. Although the γ-phase copper-zinc alloy is harder and forms shallower pits and micro-pits compared to those extruded from β-phase and β'-phase alloys, resulting in a lesser flushing effect, its high zinc content promotes pronounced vaporization during wire cut electrical discharge machining, also contributing to increased cutting speed.

Preferably, the concentration of the additive in the electroplating solution is 8-25 g/L. Preferably, the saccharide organic compound is one or more mixtures selected from maltose, lactose, dextrin, and sucrose.

Additional aspects and advantages of the present invention will be partially set forth in the following description, and partially become apparent from the description, or may be learned through practice of the invention.

### BRIEF DESCRICRIPTION OF THE DRAWINGS

FIG. 1 is a partial cross-selection view of an electrode wire prepared by the preparing method provided in the present invention;
FIG. 2 is a SEM picture of the surface of the electrode wire according to example 1 before etching;
FIG. 3 is a SEM picture of the surface of the electrode wire according to example 1 after etching;
FIG. 4 is a partial cross-selection view of another electrode wire prepared by the preparing method provided in the present invention;
FIG. 5 is a SEM picture of the surface of the electrode wire according to example 4 before etching;
FIG. 6 is a SEM picture of the surface of the electrode wire according to example 4 after etching;
FIG. 7 is a partial cross-selection view of another electrode wire prepared by the preparing method provided in the present invention;
FIG. 8 is a SEM picture of the surface of the electrode wire according to example 7 before etching;
FIG. 9 is a SEM picture of the surface of the electrode wire according to example 7 after etching;
FIG. 10 is a partial cross-selection view of another electrode wire prepared by the preparing method provided in the present invention;
FIG. 11 is a SEM picture of the surface of the electrode wire according to example 10 before etching;
FIG. 12 is a SEM picture of the surface of the electrode wire according to example 10 after etching. Reference numerals: 1.Core material, 2.The intermediate layer, 20.Pit, 200.Micro-pit, 21.Crack, 22.β-phase copper-zinc alloy layer, 23.γ-phase copper-zinc alloy layer, 3.The surface layer.

### DETAILED DESCRIPTION

Embodiments of the present disclosure will be described in detail hereinafter, and exemplary embodiments will be shown in accompanying drawings, wherein identical or like reference numerals designate identical or like elements or elements having the same or like functions throughout the specification. The embodiments described hereinafter with reference to the accompanying drawings are exemplary and are intended to explain the disclosure and are not to be construed as limitations of the present disclosure.

Before presenting specific embodiments, the structural features of the electrode wire for electrical discharge machining provided by the present invention and the principles of its manufacturing method are explained as follows:
Brass is generally adopted in preparing mother-bar. Specifically, the mother-bar is typically made of CuZn37 brass or CuZn40 brass. Red copper (i.e., pure copper) may also be used to prepare mother-bar, or copper alloys other than brass may be used to prepare mother-bars.

The electroplating solution comprises the saccharide organic compound, and this kind of compound can be absorbed onto the crystal surfaces of the mother-bar and the zinc coating layer, retarding the reduction reaction of zinc ions. This results in slowing the crystallization of the zinc coating layer and refining its grains, thereby imparting a brittle-hard characteristic to the electrodeposited zinc coating layer. Meanwhile, in the present preparing method, the electroplating current density is controlled within 5-150 A/dm², and within this current density range, the grains of the zinc coating layer further refine, and a greater amount of saccharide organic compound is adsorbed onto the crystal surface the zinc coating layer, enhancing its efficacy in retarding zinc ion reduction and ultimately obtaining a denser, more brittle-hard zinc coating layer. During subsequent heat treatment, an alloying reaction occurs between the zinc coating layer and the mother-bar. In this process, the saccharide organic compound between grains reacts with copper and zinc elements to form harder mixtures and oxides containing copper, zinc, carbon, and other elements. Structurally, this manifests as irregular micro-particles distributed on the interlayer-facing side of the surface layer transformed from the zinc coating layer. After die drawing, the surface layer develops cracks and the cracks distribute in blocky or flaky structures outside the intermediate layer. Consequently, the brittle-hard mixtures and oxides are pressed into the intermediate layer in blocky or flaky forms, creating pits. Simultaneously, irregular tiny particles compress against the inner surfaces of these pits to form micro-pits. The magnitude of the current density range plays a critical role in the manufacturing process. If the current density is too low, it fails to promote grain refinement of the zinc plating layer as described above. If the current density is too high, it adversely affects the zinc plating effect, causing the zinc plating layer to blacken and scorch. It should also be noted that since micro-pits are formed by extrusion of irregular micro-particles distributed on the interlayer-facing side of the surface layer onto the inner surfaces of pits, and because the irregular micro-particles on the surface layer are not uniformly smooth-potentially exhibiting certain concave structures-after die drawing, when forming pits and micro-pits, adjacent micro-pits may exhibit relatively flat structures or certain protrusions.

Additionally, during the actual production and processing process, due to volatilization of certain components, wear loss, etc., there may be some voids between the surface layer and the pits or micro-pits. In this embodiment, the filling of the afore-mentioned pits and the afore-mentioned micro-pits includes both case where the pits and micro-pits are completely filled by the surface layer, and case where the pits and micro-pits are not completely filled by the surface layer, leaving voids. On the same electrode wire, both the completely filled and incompletely filled cases may coexist.

During the heat treatment period of the manufacturing process, zinc element in the zinc coating layer and copper element in the core material interdiffuse to form a copper-zinc alloy (i.e., the alloying process). Under different heat treatment process parameters, the copper-zinc alloy can be in the β phase, γ phase, or β+γ phase. Wherein, the β phase may also refer to the β' phase. For convenience of description, the following examples, the β phase and the β' phase are collectively referred to as β phase, meaning that β phase in the specification represents one or both of β phase and β' phase.

In terms of location, pits are formed at the interface between the intermediate layer and the surface layer, while micro-pits are formed on the surfaces of the pits. In terms of size comparison, the depth of pit is 0.1-20 µm, and the depth of micro-pit is 0.05-10 µm. The afore-mentioned depths of the pit and that of the micro-pit refer to dimensions obtained by cross-sectioning the electrode wire and measuring the radial dimensions of pits and micro-pits at different positions on the cross-section. The dimensions of pits and that of micro-pits at different positions fall within the above ranges. Both pits and micro-pits distribute irregularly. Additionally, it should be noted that under certain process conditions, cracks exist in the intermediate layer inside the electrode wire. Cracks differ significantly from pits and micro-pits in morphology: cracks are elongated and slit-like, while pits and micro-pits are open pit-like. Based on the above differences in structural morphology, pits and micro-pits contribute more to increasing the contact area between the intermediate layer and the working fluid. Moreover, cracks are formed by fracture of the copper-zinc alloy layer during the drawing process, while pits and micro-pits are formed by extrusion of the intermediate layer by the surface layer during the drawing process.

In actual manufacturing, the wire diameter specification of the selected mother-bar is generally between 0.5-1.2 mm. The thickness of the intermediate layer in the finished electrode wire is 1-50 µm, and the thickness of the surface layer is 0.1-20 µm. It should be noted that the thicknesses of the afore-mentioned thickness of the intermediate layer and that of the surface layer refer to dimensions obtained by cross-sectioning the electrode wire and measuring the radial dimensions of the intermediate layer and surface layer at different positions on the cross-section. The dimensions of the intermediate layer and that of the surface layer at different positions fall within the above ranges.

By mass percentage, the carbon content in the surface layer of the electrode wire prepared in this example is ≥0.5%, and the zinc content in the surface layer of the electrode wire prepared in this example is ≥60%.

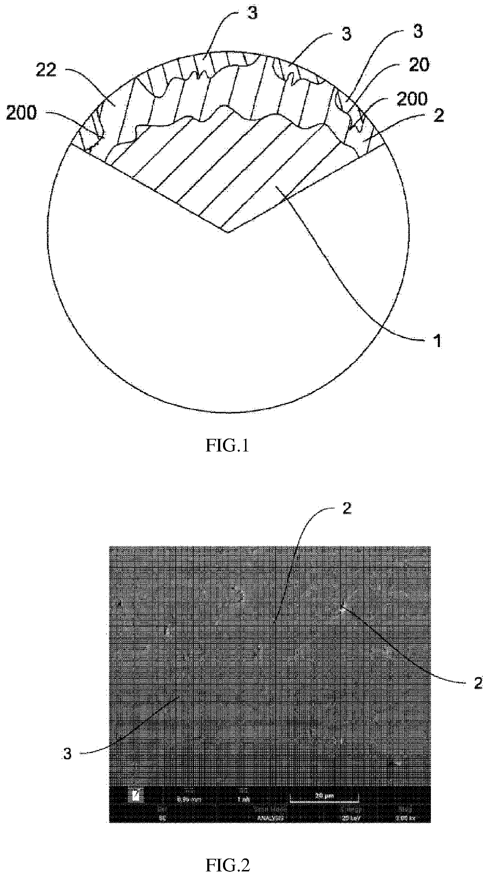

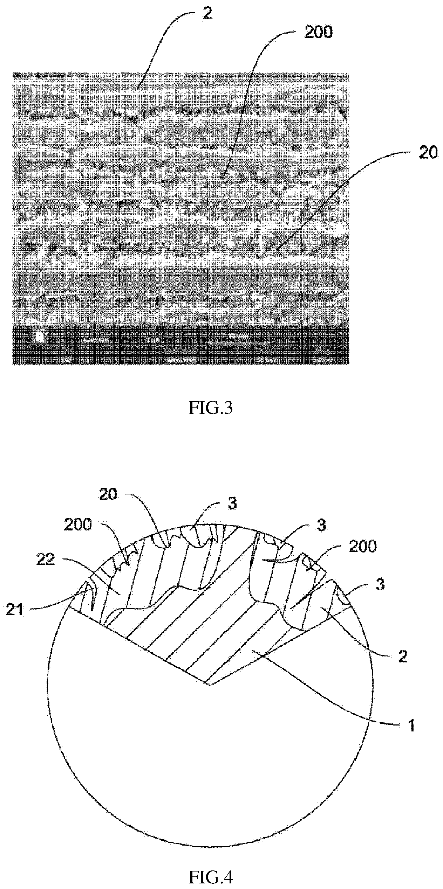

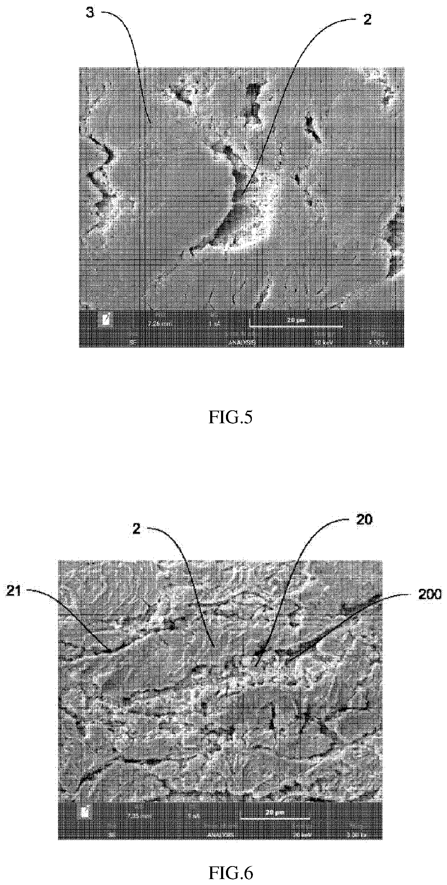

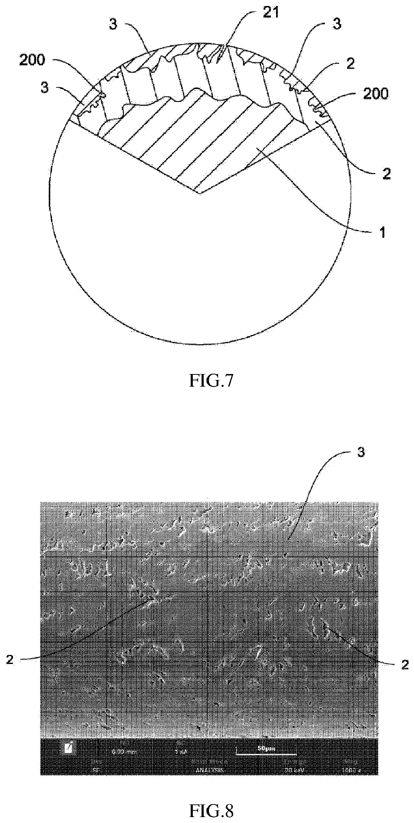

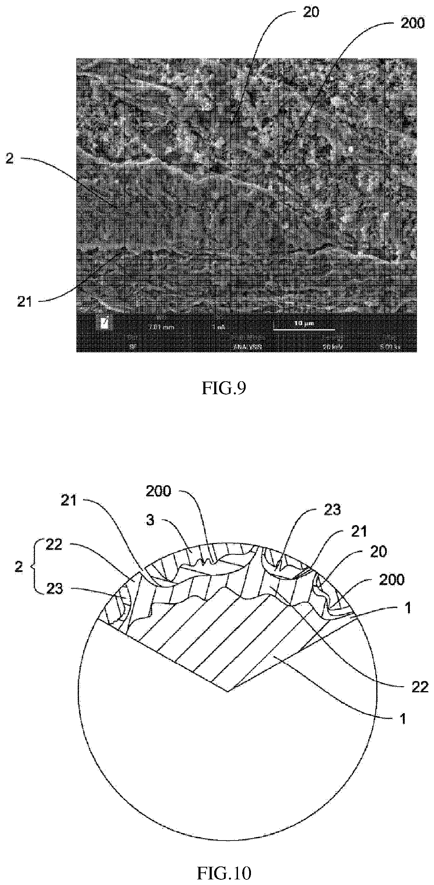

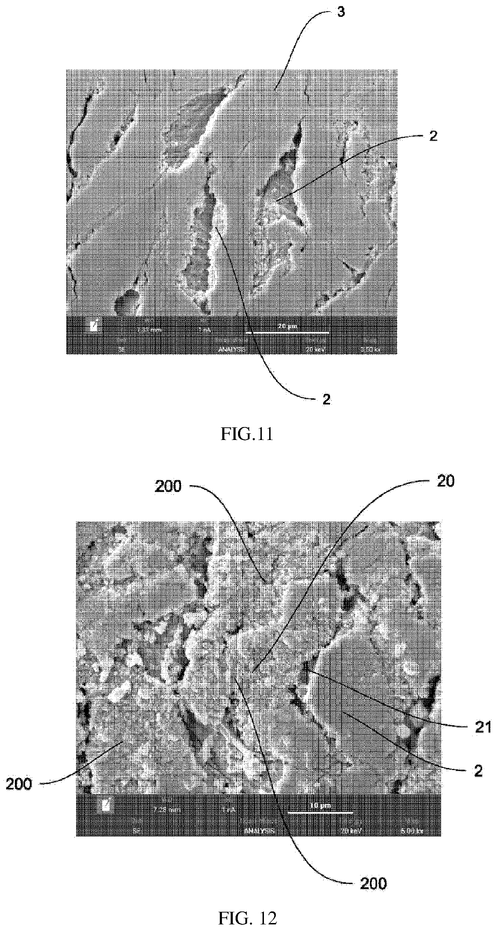

The present invention provides three kinds of preparing method. Examples 1-3 below adopt the first preparing method: the cross-section of the finished electrode wire is shown in Fig. 1, and the SEM pictures of electrode wire pre-/post-etching are shown in Fig. 2 and Fig. 3. Examples 4-6 adopt the second preparing method: the cross-section of the finished electrode wire is shown in Fig. 4, and the SEM pictures of electrode wire pre-/post-etching are shown in Fig. 5 and Fig. 6. Examples 7-12 adopt the third preparing method: the cross-section of the finished electrode wire according to examples 7-9 is shown in Fig. 7, and the SEM pictures of electrode wire pre-/post-etching are shown in Figs. 8 and 9. The cross-section of the finished electrode wire according to examples 10-12 is shown in Fig. 10, and the SEM pictures of electrode wire pre-/post-etching are shown in Fig. 11 and Fig. 12. In the present invention, the SEM pictures were obtained by chemically etching away the surface layer of the electrode wire and observing by an electron microscope. Specifically, cut off a segment of the electrode wire and put it in dilute hydrochloric acid (10%-20% by mass) for 30-120s, etching away the surface layer and exposing the intermediate layer.

Example 1: this example provides a method for preparing an electrode wire for electrical discharge machining, comprising:
S100: providing a mother-bar made of CuZn37 brass with the wire diameter specification of 1.2 mm;
S101: electroplating zinc on the surface of the mother-bar, and the electroplating solution comprises an additive, thereby forming a 20-µm-thick zinc coating layer on the surface of the mother-bar to obtain a first wire blank; wherein the electroplating current density range is 150 A/dm², the additive is one or more selected from the following materials: maltose, lactose, dextrin, and sucrose, and the concentration of the additive in the electroplating solution is 12 g/L;
S102: heat-treating the first wire blank, wherein the heat treatment temperature is 400°C, the heat treatment duration is 10h, and the copper element in the mother-bar and the zinc element in the zinc coating layer interdiffuse during the heat treatment to form a β-phase copper-zinc alloy, thereby obtaining a second wire blank. From inside to outside, the second wire blank sequentially comprises a core material, a β-phase copper-zinc alloy layer serving as an intermediate layer, and a surface layer;
S103: subjecting the second wire blank to drawing and stress relief annealing to obtain a finished electrode wire with a diameter of 0.25mm (cross-section in Fig. 1). In this step, the surface layer 3 fractures and generates cracks during drawing, and the intermediate layer 2 extrudes through these cracks, resulting in the surface layer 3 discontinuously covering the exterior of the intermediate layer 2. Additionally, the surface layer 3 embeds into the intermediate layer 2 during drawing, forming pits 20 on the intermediate layer 2 and micro-pits 200 in the pits.

Example 2: this example provides a method for preparing an electrode wire for electrical discharge machining, comprising:
S100: providing a mother-bar made of CuZn40 brass with the wire diameter specification of 1 mm;
S101: electroplating zinc on the surface of the mother-bar, and the electroplating solution comprises an additive, thereby forming a 12-µm-thick zinc coating layer on the surface of the mother-bar to obtain a first wire blank; wherein the electroplating current density range is 100 A/dm², the additive comprises at least one of the following materials: maltose, lactose, dextrin, and sucrose, and the concentration of the additive in the electroplating solution is 8 g/L;
S102: heat-treating the first wire blank, wherein the heat treatment temperature is 500°C, the heat treatment duration is 1h, and the copper element in the mother-bar and the zinc element in the zinc coating layer interdiffuse during the heat treatment to form a β-phase copper-zinc alloy layer, thereby obtaining a second wire blank. From inside to outside, the second wire blank sequentially comprises a core material, a β-phase copper-zinc alloy layer serving as an intermediate layer, and a surface layer;
S103: subjecting the second wire blank to drawing and stress relief annealing to obtain a finished electrode wire with a diameter of 0.25mm(cross-section in Fig. 1). In this step, the surface layer 3 fractures and generates cracks during drawing, and the intermediate layer 2 extrudes through these cracks, resulting in the surface layer 3 discontinuously covering the exterior of the intermediate layer 2. Additionally, the surface layer 3 embeds into the intermediate layer 2 during drawing, forming pits 20 on the intermediate layer 2 and micro-pits 200 in the pits.

Example 3: this example provides a method for manufacturing an electrode wire for electrical discharge machining, comprising:
S100: providing a mother-bar made of CuZn37 brass with the wire diameter specification of 0.5 mm;
S101: electroplating zinc on the surface of the mother-bar, and the electroplating solution comprises an additive, thereby forming a 3-µm-thick zinc coating layer on the surface of the mother-bar to obtain a first wire blank; wherein the electroplating current density range is 5 A/dm², the additive comprises at least one of the following materials: maltose, lactose, dextrin, and sucrose, and the concentration of the additive in the electroplating solution is 25 g/L;
S102: heat-treat the first wire blank, wherein the heat treatment temperature is 300°C, the heat treatment duration is 50h, and the copper element in the mother-bar and the zinc element in the zinc coating layer interdiffuse during the heat treatment to form a β-phase copper-zinc alloy layer, thereby obtaining a second wire blank. From inside to outside, the second wire blank sequentially comprises a core material, a β-phase copper-zinc alloy layer serving as an intermediate layer, and a surface layer;
S103: subjecting the second wire blank to drawing and stress relief annealing to obtain a finished electrode wire with a diameter of 0.25mm (cross-section in Fig. 1). In this step, the surface layer 3 fractures and generates cracks during drawing, and the intermediate layer 2 extrudes through these cracks, resulting in the surface layer 3 discontinuously covering the exterior of the intermediate layer 2. Additionally, the surface layer 3 embeds into the intermediate layer 2 during drawing, forming pits 20 on the intermediate layer 2 and micro-pits 200 in the pits.

Applying the preparing methods provided in the aforementioned Examples 1 to 3, within the finished electrode wire, the intermediate layer 2 has pits 20 and micro-pits 200 that increase its surface area, which can improve cutting efficiency during wire cut electrical discharge machining processing. As shown in Fig. 2 and Fig. 3, the surface layer 3 of the electrode wire has cracks that can expose the internal intermediate layer 2 (for this electrode wire, i.e., the β-phase copper-zinc alloy layer 22) initially. As wire cut electrical discharge machining processing proceeds, the surface layer 3 is consumed by discharge etching, exposing the underlying intermediate layer 2, where pits 20 and micro-pits 200 on the surface of the intermediate layer 2 become visible. Additionally, as the surface layer discontinuously covers the intermediate layer, tips also form at discontinuities regions of the surface layer. Discharge occurs more readily at these tips, thereby reducing the reaction time for spark generation during wire cut electrical discharge machining and thus accelerating cutting speed.

Example 4: this example provides a method for manufacturing an electrode wire for electrical discharge machining, comprising:
S200: providing a mother-bar made of CuZn40 brass with the wire diameter specification of 0.8 mm;
S201: electroplating zinc on the surface of the mother-bar, and the electroplating solution comprises an additive, thereby forming a 8-µm-thick zinc coating layer on the surface of the mother-bar to obtain a first wire blank; wherein the electroplating current density range is 70 A/dm², the additive comprises at least one of the following materials: maltose, lactose, dextrin, and sucrose, and the concentration of the additive in the electroplating solution is 25 g/L;
S202: heat-treating the first wire blank, wherein the heat treatment temperature is 130°C, the heat treatment duration is 20h, and the copper element in the mother-bar and the zinc element in the zinc coating layer interdiffuse during the heat treatment to form a γ-phase copper-zinc alloy layer, thereby obtaining a second wire blank. From inside to outside, the second wire blank sequentially comprises a core material, a γ-phase copper-zinc alloy layer serving as an intermediate layer, and a surface layer;
S203: drawing the second wire blank to obtain a third wire blank with the wire diameter specification of 0.3 mm, wherein both the surface layer and the γ-phase copper-zinc alloy layer fracture during drawing, the surface layer generating cracks, and the γ-phase copper-zinc alloy layer generating cracks;
S204: heat-treating the third wire blank to obtain a fourth wire blank, wherein the heat treatment temperature is 300°C, the heat treatment duration is 50h, transforming the γ-phase copper-zinc alloy layer into a β-phase copper-zinc alloy layer serving as an intermediate layer;
S205: subjecting the fourth wire blank to drawing and stress relief annealing to produce a finished electrode wire with a diameter of 0.25(cross-section in Fig.4). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Example 5: this example provides a method for preparing an electrode wire for electrical discharge machining, comprising:
S200: providing a mother-bar made of CuZn40 brass with the wire diameter specification of 1.2 mm;
S201: electroplating zinc on the surface of the mother-bar, and the electroplating solution comprises an additive, thereby forming a 15-µm-thick zinc coating layer on the surface of the mother-bar to obtain a first wire blank; wherein the electroplating current density range is 120 A/dm², the additive comprises at least one of the following materials: maltose, lactose, dextrin, and sucrose, and the concentration of the additive in the electroplating solution is 8 g/L;
S202: heat-treating the first wire blank, wherein the heat treatment temperature is 250°C, the heat treatment duration is 3h, and the copper element in the mother-bar and the zinc element in the zinc coating layer interdiffuse during the heat treatment to form a γ-phase copper-zinc alloy layer, thereby obtaining a second wire blank. From inside to outside, the second wire blank sequentially comprises a core material, a γ-phase copper-zinc alloy layer serving as an intermediate layer, and a surface layer;
S203: drawing the second wire blank to obtain a third wire blank with the wire diameter specification of 0.5 mm, wherein both the surface layer and the γ-phase copper-zinc alloy layer fracture during drawing, the surface layer generating cracks, and the γ-phase copper-zinc alloy layer generating cracks;
S204: heat-treating the third wire blank to obtain a fourth wire blank, wherein the heat treatment temperature is 550°C, the heat treatment duration is 1h, transforming the γ-phase copper-zinc alloy layer into a β-phase copper-zinc alloy layer;
S205: subjecting the fourth wire blank to drawing and stress relief annealing to obtain a finished electrode wire with a diameter of 0.25mm (cross-section in Fig.4). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Example 6: this example provides a method for preparing an electrode wire for electrical discharge machining, comprising:
S200: providing a mother-bar made of CuZn437 brass with the wire diameter specification of 0.95 mm;
S201: electroplating zinc on the surface of the mother-bar, and the electroplating solution comprises an additive, thereby forming a 11-µm-thick zinc coating layer on the surface of the mother-bar to obtain a first wire blank; wherein the electroplating current density range is 90 A/dm², the additive comprises at least one of the following materials: maltose, lactose, dextrin, and sucrose, and the concentration of the additive in the electroplating solution is 16 g/L;
S202: heat-treating the first wire blank, wherein the heat treatment temperature is 180°C, the heat treatment duration is 20h, and the copper element in the mother-bar and the zinc element in the zinc coating layer interdiffuse during the heat treatment to form a γ-phase copper-zinc alloy layer, thereby obtaining a second wire blank. From inside to outside, the second wire blank sequentially comprises a core material, a γ-phase copper-zinc alloy layer serving as an intermediate layer, and a surface layer;
S203: drawing the second wire blank to obtain a third wire blank with the wire diameter specification of 0.55 mm, wherein both the surface layer and the γ-phase copper-zinc alloy layer fracture during drawing, the surface layer generating cracks, and the γ-phase copper-zinc alloy layer generating cracks;
S204: heat-treating the third wire blank to produce a fourth wire blank, wherein the heat treatment temperature is 400°C, the heat treatment duration is 28h, transforming the γ-phase copper-zinc alloy layer into a β-phase copper-zinc alloy layer;
S205: subjecting the fourth wire blank to drawing and stress relief annealing to obtain a finished electrode wire with a diameter of 0.25mm(cross-section in Fig.4). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

It should be noted that in heat-treating step S202 of the afore-mentioned examples 4 to 6, the statement "the copper element in the mother-bar and the zinc element in the zinc coating layer interdiffuse during the heat treatment to form a γ-phase copper-zinc alloy layer" indicates that the composition of the copper-zinc alloy layer formed in this process is primarily a γ-phase copper-zinc alloy, but may also generate a small amount of β-phase copper-zinc alloy. It is to be understood that this step is primarily aimed at obtaining the γ-phase copper-zinc alloy to facilitate the subsequent step S203, where drawing readily induces cracks in the copper-zinc alloy layer (γ-phase copper-zinc alloy is relatively hard and prone to forming cracks during drawing).

Applying the manufacturing methods provided in the afore-mentioned examples 4 to 6, within the finished electrode wire, and the intermediate layer 2 contains pits 20 and micro-pits 200 that increase its surface area, which can improve cutting efficiency during wire cut electrical discharge machining processing. As shown in Fig. 5 and Fig. 6, the surface layer 3 of the electrode wire has cracks that can expose core material 1 and the internal intermediate layer 2 (for this electrode wire, i.e., the β-phase copper-zinc alloy layer 22) initially. As wire cut electrical discharge machining processing proceeds, the surface layer is consumed by discharge etching, exposing the underlying intermediate layer, where pits and micro-pits on the surface of the intermediate layer become visible. Additionally, besides pits and micro-pits, the β-phase copper-zinc alloy layer serving as the intermediate layer finally also contains cracks. The strong electric field formed between the electrode wire and the workpiece also exhibits localized variations. At locations where cracks 21 form, the electric field is further enhanced, thereby prioritizing discharge generation at the crack 21 edges. Compared to electrode wire without cracks, applying an electrode wire with cracks reduces the reaction time for spark generation, thus accelerating the speed of wire cut electrical discharge machining. Simultaneously, since portions of the core material 1 and intermediate layer 2 are exposed, both the core material and the β-phase copper-zinc alloy can enhance discharge efficiency, further increasing the wire cutting speed.

Example 7: this example provides a method for manufacturing an electrode wire for electrical discharge machining, comprising:
S300: providing a mother-bar made of CuZn37 brass with the wire diameter specification of 0.88 mm;
S301: electroplating zinc on the surface of the mother-bar, and the electroplating solution comprises an additive, thereby forming a 11-µm-thick zinc coating layer on the surface of the mother-bar to obtain a first wire blank; wherein the electroplating current density range is 80 A/dm², the additive comprises at least one of the following materials: maltose, lactose, dextrin, and sucrose, and the concentration of the additive in the electroplating solution is 16 g/L;
S302: drawing the first wire blank to obatin a second wire blank with the wire diameter specification of 0.45 mm. During this process, the dense and brittle-hard zinc coating layer fractures, allowing the mother-bar inside to extrude through the fracture points beyond the zinc coating;
S303: heat-treating the second wire blank, wherein the heat treatment temperature is 350°C, the heat treatment duration is 50h, and the copper element in the mother-bar and the zinc element in the zinc coating layer interdiffuse during the heat treatment to form a β-phase copper-zinc alloy layer, thereby obtaining a third wire blank. From inside to outside, the third wire blank sequentially comprises a core material, a β-phase copper-zinc alloy layer, and a surface layer;
S304: subjecting the third wire blank to drawing and stress relief annealing to produce a finished electrode wire with a diameter of 0.25mm(cross-section in Fig.7). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Example 8: this example provides a method for preparing an electrode wire for electrical discharge machining, comprising:
S300: providing a mother-bar made of CuZn37 brass with the wire diameter specification of 1.2 mm;
S301: electroplating zinc on the surface of the mother-bar, and the electroplating solution comprises an additive, thereby forming a 6-µm-thick zinc coating layer on the surface of the mother-bar to obtain a first wire blank; wherein the electroplating current density range is 40 A/dm², the additive comprises at least one of the following materials: maltose, lactose, dextrin, and sucrose, and the concentration of the additive in the electroplating solution is 8 g/L;
S302: drawing the first wire blank to obtain a second wire blank with the wire diameter specification of 0.6 mm. During this process, the dense and brittle-hard zinc coating layer fractures, allowing the mother-bar inside to extrude through the fracture points beyond the zinc coating; S303: heat-treating the second wire blank, wherein the heat treatment temperature is 500°C, the heat treatment duration is 3h, and the copper element in the mother-bar and the zinc element in the zinc coating layer interdiffuse during the heat treatment to form a β-phase copper-zinc alloy layer, thereby obtaining a third wire blank. From inside to outside, the third wire blank sequentially comprises a core material, a β-phase copper-zinc alloy layer, and a surface layer;
S304: subjecting the third wire blank to drawing and stress relief annealing to produce a finished electrode wire with a diameter of 0.25(cross-section in Fig.7). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Example 9: this example provides a method for manufacturing an electrode wire for electrical discharge machining, comprising:
S300: providing a mother-bar made of CuZn37 brass with the wire diameter specification of 0.8 mm;
S301: electroplating zinc on the surface of the mother-bar, and the electroplating solution comprises and additive, thereby forming a 12-µm-thick zinc coating layer on the surface of the mother-bar to obtain a first wire blank; wherein the electroplating current density range is 120 A/dm², the additive comprises at least one of the following materials: maltose, lactose, dextrin, and sucrose, and the concentration of the additive in the electroplating solution is 25 g/L;
S302: drawing the first wire blank to obtain a second wire blank with the wire diameter specification of 0.55 mm. During this process, the dense and brittle-hard zinc coating layer fractures, allowing the mother-bar inside to extrude through the fracture points beyond the zinc coating;
S303: heat-treating the second wire blank, wherein the heat treatment temperature is 440°C, the heat treatment duration is 20h, and the copper element in the mother-bar and the zinc element in the zinc coating layer interdiffuse during the heat treatment to form a β-phase copper-zinc alloy layer, thereby obtaining a third wire blank. From inside to outside, the third wire blank sequentially comprises a core material, a β-phase copper-zinc alloy layer, and a surface layer;
S304: subjecting the third wire blank to drawing and stress relief annealing to obtain a finished electrode wire with a diameter of 0.25mm (cross-section in Fig.7). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Applying the manufacturing methods provided in the afore-mentioned examples 7 to 9, within the finished electrode wire, the intermediate layer 2 has pits 20 and micro-pits 200 that increase its surface area, which can improve cutting efficiency during wire cut electrical discharge machining processing. As shown in Fig. 5 and Fig. 6, the surface layer 3 of the electrode wire has cracks that can expose core material 1 and the internal intermediate layer 2 (for this electrode wire, i.e., the β-phase copper-zinc alloy layer 22) initially. As wire cut electrical discharge machining processing proceeds, the surface layer is consumed by discharge etching, exposing the underlying intermediate layer, where pits and micro-pits on the surface of the intermediate layer become visible. Additionally, besides pits and micro-pits, the final β-phase copper-zinc alloy layer serving as the intermediate layer also has cracks 21. The strong electric field formed between the electrode wire and the workpiece also exhibits localized variations. At locations where cracks 21 form, the electric field is further enhanced, thereby prioritizing discharge generation at the crack 21 edges. Compared to electrode wire without cracks, applying an electrode wire with cracks reduces the reaction time for spark generation, thus accelerating the speed of wire cut electrical discharge machining. It should be noted that cracks can be formed on both the surface layer 3 and the intermediate layer 2 of this electrode wire. Simultaneously, since portions of the core material and the β-phase copper-zinc alloy layer are exposed through the surface layer, both the core material and the β-phase copper-zinc alloy layer can enhance discharge efficiency, further increasing the wire cutting speed.

Example 10: this example provides a method for manufacturing an electrode wire for electrical discharge machining, comprising:
S300: providing a mother-bar made of CuZn37 brass with the wire diameter specification of 0.95 mm;
S301: electroplating zinc on the surface of the mother-bar, and the electroplating solution comprises an additive, thereby forming a 11-µm-thick zinc coating layer on the surface of the mother-bar to obtain a first wire blank; wherein the electroplating current density range is 100 A/dm², the additive comprises at least one of the following materials: maltose, lactose, dextrin, and sucrose, and the concentration of the additive in the electroplating solution is 16 g/L;
S302: drawing the first wire blank to obtain a second wire blank with the wire diameter specification of 0.5 mm. During this process, the dense and brittle-hard zinc coating layer fractures, allowing the mother-bar inside to extrude through the fracture points beyond the zinc coating; S303: heat-treating the second wire blank, wherein the heat treatment temperature is 200°C, the heat treatment duration is 50h, and the copper element in the mother-bar and the zinc element in the zinc coating layer interdiffuse during the heat treatment to form a β-phase copper-zinc alloy layer and a γ-phase copper-zinc alloy layer, thereby obtaining a third wire blank. From inside to outside, the third wire blank sequentially comprises a core material, a β-phase copper-zinc alloy layer, a γ-phase copper-zinc alloy layer and a surface layer;
S304: subject the third wire blank to drawing and stress relief annealing to obtain a finished electrode wire with a diameter of 0.25(cross-section in Fig.10). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Example 11: this example provides a method for preparing an electrode wire for electrical discharge machining, comprising:
S300: providing a mother-bar made of CuZn37 brass with the wire diameter specification of 1.2 mm;
S301: electroplating zinc on the surface of the mother-bar, and the electroplating solution comprises an additive, thereby forming a 4.5-µm-thick zinc coating layer on the surface of the mother-bar to obtain a first wire blank; wherein the electroplating current density range is 30 A/dm², the additive comprises at least one of the following materials: maltose, lactose, dextrin, and sucrose, and the concentration of the additive in the electroplating solution is 8 g/L;
S302: drawing the first wire blank to obtain a second wire blank with the wire diameter specification of 0.7 mm. During this process, the dense and brittle-hard zinc coating layer fractures, allowing the internal mother-bar to extrude through the fracture points beyond the zinc coating;
S303: heat-treat the second wire blank, wherein the heat treatment temperature is 300°C, the heat treatment duration is 22h, and the copper element from the mother-bar and the zinc element from the zinc coating layer interdiffuse during the heat treatment to form a β-phase copper-zinc alloy layer and a γ-phase copper-zinc alloy layer, thereby producing a third wire blank. From inside to outside, the third wire blank sequentially comprises a core material, a β-phase copper-zinc alloy layer, γ-phase copper-zinc alloy layer and a surface layer;
S304: subject the third wire blank to drawing and stress relief annealing to produce a finished electrode wire with a diameter of 0.25mm (cross-section in Fig.10). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Example 12: this example provides a method for manufacturing an electrode wire for electrical discharge machining, comprising:
S300: providing a pure copper mother-bar with the wire diameter specification of 0.8 mm;
S301: electroplating zinc on the surface of the mother-bar, and the electroplating solution comprises an additive, thereby forming a 12-µm-thick zinc coating layer on the surface of the mother-bar to obtain a first wire blank; wherein the electroplating current density range is 110 A/dm², the additive comprises at least one of the following materials: maltose, lactose, dextrin, and sucrose, and the concentration of the additive in the electroplating solution is 25 g/L;
S302: drawing the first wire blank to obtain a second wire blank with the wire diameter specification of 0.5 mm. During this process, the dense and brittle-hard zinc coating layer fractures, allowing the mother-bar inside to extrude through the fracture points beyond the zinc coating;
S303: heat-treating the second wire blank, wherein the heat treatment temperature is 350°C, the heat treatment duration is 3h, and the copper element in the mother-bar and the zinc element in the zinc coating layer interdiffuse during the heat treatment to form a β-phase copper-zinc alloy layer and a γ-phase copper-zinc alloy layer, thereby producing a third wire blank. From inside to outside, the third wire blank sequentially comprises a core material, a β-phase copper-zinc alloy layer, a γ-phase copper-zinc alloy layer and a surface layer;
S304: subject the third wire blank to drawing and stress relief annealing to obtain a finished electrode wire with a diameter of 0.25mm (cross-section in Fig.10). In this step, the surface layer 3 embeds into the intermediate layer 2 during drawing, forming pits 20 on the intermediate layer 2 and micro-pits 200 in the pits. The intermediate layer 2 extrudes through these cracks and makes the surface layer 3 discontinuously covers the exterior of the intermediate layer 2, and portions of the core material 1 can extrude through fractured sections of the intermediate layer 2.

Applying the preparing methods provided in the afore-mentioned examples 10 to 12, within the finished electrode wire, the intermediate layer 2 has pits 20 and micro-pits 200 that increase its surface area, which can improve cutting efficiency during wire cut electrical discharge machining processing. As shown in Fig. 11 and Fig. 12, the surface layer 3 of the electrode wire has cracks that can expose the core material 1 and the internal intermediate layer 2 (for this electrode wire, i.e., the γ-phase copper-zinc alloy layer 23) initially. As wire cut electrical discharge machining processing proceeds, the surface layer is consumed by discharge etching, exposing the underlying intermediate layer, where pits and micro-pits on the surface of the intermediate layer become visible. Additionally, besides pits and micro-pits, the intermediate layer also contains cracks 21. The strong electric field formed between the electrode wire and the workpiece also exhibits localized variations. At locations where cracks 21 formed, the electric field is further enhanced, thereby prioritizing discharge generation at the crack 21 edges. Compared to electrode wire without cracks, applying an electrode wire with cracks reduces the reaction time for spark generation, thus accelerating the speed of wire cut electrical discharge machining. It should be noted that cracks can be formed on both the surface layer 3 and the intermediate layer 2 of this electrode wire. Simultaneously, since portions of the core material and β-phase copper-zinc alloy layer are exposed through the surface layer, both the core material and the β-phase copper-zinc alloy layer can enhance discharge efficiency, further increasing the wire cutting speed. After the surface layer is consumed by discharge etching, the γ-phase copper-zinc alloy layer is exposed first. Due to its higher zinc content, the γ-phase copper-zinc alloy layer exhibits superior vaporization effects, which can further enhance the wire cutting speed.
Comparative Example 1: Commercially purchased brass electrode wire with a wire diameter specification of 0.25 mm;
Comparative Example 2: Commercially purchased electrode wire with zinc coating layer and a wire diameter specification of 0.25 mm;
Comparative Example 3: Commercially purchased gamma-phase electrode wire with a wire diameter specification of 0.25 mm;

The table below shows the structural comparison between electrode wires prepared in Examples 1 to 12 and those purchased in Comparative Examples 1 to 3:

| | No. | Intermediate Layer Cu-Zn Alloy Composition | Presence of Pits and Micro-pits on the Intermediate Layer Surface | Presence of cracks in the Intermediate Layer | Presence of Cracks on the Surface Layer |
|---|---|---|---|---|---|
| Example | 1 | β Phase | YES | NO | YES |
| | 2 | β Phase | YES | NO | YES |
| | 3 | β Phase | YES | NO | YES |
| | 4 | β Phase | YES | YES | YES |
| | 5 | β Phase | YES | YES | YES |
| | 6 | β Phase | YES | YES | YES |
| | 7 | β Phase | YES | YES | YES |
| | 8 | β Phase | YES | YES | YES |
| | 9 | β Phase | YES | YES | YES |
| | 10 | β+γ Phase | YES | YES | YES |
| | 11 | β+γ Phase | YES | YES | YES |
| | 12 | β+γ Phase | YES | YES | YES |
| Comparative Example | 1 | NONE | NO | NO | NO |
| | 2 | β Phase | NO | NO | YES |
| | 3 | γ Phase | NO | NO | YES |

Electrode wires prepared according to examples 1 to 12 and those purchased in comparative examples 1 to 3 were subjected to wire cut electrical discharge machining tests. The test conditions are shown in the table below:

| | |
|---|---|
| Machine Tool | Mitsubishi MV1200 |
| Workpiece Thickness | 40 mm |
| Workpiece Shape | 6*6 mm |
| Workpiece Material | SKD11 |
| Electrode Wire Specification | 0.25 mm |
| Machining Pass | Rough Cutting |

The test results are shown in the table below:

| | NO. | Cutting Time (min) | Cutting Speed Improvement Degree |
|---|---|---|---|
| Example | 1 | 06:28 | 17.80% |
| | 2 | 06:40 | 15.25% |
| | 3 | 07:04 | 10.17% |
| | 4 | 06:15 | 20.55% |
| | 5 | 05:54 | 25.00% |
| | 6 | 06:06 | 22.46% |
| | 7 | 06:16 | 20.34% |
| | 8 | 06:32 | 16.95% |
| | 9 | 05:59 | 23.94% |
| | 10 | 06:42 | 14.83% |
| | 11 | 06:28 | 17.80% |
| | 12 | 06:04 | 22.88% |
| Comparative Example | 1 | 07:52 | 0 |
| | 2 | 07:35 | 3.60% |
| | 3 | 07:28 | 5.10% |

Through comparative testing, it is demonstrated that the electrode wires prepared by the method provided in the present invention, as there are the pits and micro-pits on their intermediate layer inside, this significantly enhance the performance of the electrode wire, thereby increasing the cutting speed of wire cut electrical discharge machining.

In the present invention, unless explicitly specified or limited otherwise in the embodiments, terms such as "installed," "interconnected," "connected," and "fixed" appearing in the embodiments should be broadly construed. For example, a connection may be a fixed connection, a detachable connection, or an integral connection; it may be a mechanical connection, an electrical connection, or other forms; it may be a direct connection or an indirect connection through an intermediary; it may refer to internal communication between two components or an interaction relationship between two components. Those of ordinary skill in the art can understand the specific meanings of these terms in the present invention based on specific implementations.

Although embodiments of the present invention have been shown and described above, it is to be understood that these embodiments are exemplary and should not be construed as limiting the invention. Those of ordinary skill in the art may make variations, modifications, substitutions, and adaptations to these embodiments within the scope of the present invention.

## Claims

1. An electrode wire for electrical discharge machining, comprising:
a core material;
an intermediate layer located externally to the core material; and
a surface layer located externally to the intermediate layer;
wherein the material of the core material is a metal or an alloy, and the material of the intermediate layer is a copper-zinc alloy;
wherein the intermediate layer has pits on its surface, the pit has micro-pits on its surface, the size of the micro-pit is smaller than that of the pit on which the micro-pit located, and the surface layer discontinuously covers the exterior of the intermediate layer and fills the pits and micro-pits.

2. The electrode wire for electrical discharge machining according to claim 1, wherein:
the thickness of the intermediate layer is 1-50 µm, and the thickness of the surface layer is 0.1-20 µm.

3. The electrode wire for electrical discharge machining according to claim 2, wherein:
the thickness of the intermediate layer is 5-40 µm, and the thickness of the surface layer is 0.1-15 µm.

4. The electrode wire for electrical discharge machining according to any one of claims 1 to 3, wherein:
along the radial direction of the electrode wire, the depth of the pit is 0.1-20 µm, and the depth of the micro-pit is 0.05-10 µm.

5. The electrode wire for electrical discharge machining according to claim 4, wherein:
along the radial direction of the electrode wire, the depth of the pit is 0.1-10 µm, and the depth of the micro-pit is 0.05-5 µm.

6. The electrode wire for electrical discharge machining according to claim 1, wherein:
the material of the surface layer contains carbon and zinc elements.

7. The electrode wire for electrical discharge machining according to claim 6, wherein:
by mass percentage, the carbon content in the surface layer is ≥0.5%, and the zinc content in the surface layer is ≥ 60%.

8. The electrode wire for electrical discharge machining according to claim 1, wherein:
the intermediate layer further has cracks on it.

9. The electrode wire for electrical discharge machining according to claim 1, wherein:
the intermediate layer and/or the core material is exposed at discontinuous regions of the surface layer.

10. The electrode wire for electrical discharge machining according to claim 1, wherein:
the material of the core material comprises copper or a copper alloy.

11. A method for preparing an electrode wire for electrical discharge machining, comprising:
S100: providing a mother-bar made of pure copper or a copper alloy;
S101: electroplating zinc on the surface of the mother-bar, and the electroplating solution comprises an additive, thereby forming a zinc coating layer on the surface of the mother-bar to obtain a first wire blank; wherein the additive comprises a saccharide organic compound, and the electroplating current density range is 5-150 A/dm²;
S102: heat-treating the first wire blank, wherein the copper element from the mother-bar and the zinc element from the zinc coating layer interdiffuse during the heat treatment to form an intermediate layer, thereby obtaining a second wire blank; from inside to outside, the second wire blank sequentially comprises a core material, an intermediate layer, and a surface layer;
S103: subjecting the second wire blank to drawing and stress relief annealing to obtain a finished electrode wire.

12. The method for preparing an electrode wire for electrical discharge machining according to claim 11, wherein:
in step S102, the heat treatment temperature is 300-500°C, the heat treatment duration is 1-50 h, and the material of the intermediate layer formed comprises a β-phase copper-zinc alloy and/or a β'-phase copper-zinc alloy.

13. A method for preparing an electrode wire for electrical discharge machining, comprising:
S200: providing a mother-bar made of pure copper or a copper alloy;
S201: electroplating zinc on the surface of the mother-bar, wherein an electroplating solution comprises an additive, thereby forming a zinc coating layer on the surface of the mother-bar to obtain a first wire blank; wherein the additive comprises a saccharide organic compound, and the electroplating current density range is 5-150 A/dm²;
S202: heat-treating the first wire blank, wherein the copper element from the mother-bar and the zinc element from the zinc coating layer interdiffuse during the heat treatment to form a copper-zinc alloy layer, thereby obtaining a second wire blank; from inside to outside, the second wire blank sequentially comprises a core material, a copper-zinc alloy layer, and a surface layer;
S203: drawing the second wire blank to obtain a third wire blank;
S204: heat-treating the third wire blank to obtain a fourth wire blank; from inside to outside, the fourth wire blank sequentially comprises a core material, an intermediate layer, and a surface layer;
S205: subjecting the fourth wire blank to drawing and stress relief annealing to obtain a finished electrode wire.

14. The method for preparing an electrode wire for electrical discharge machining according to claim 13, wherein:
in step S202, the heat treatment temperature is 100-250°C, the heat treatment duration is 3-20 h, and the material of the copper-zinc alloy layer formed comprises a γ-phase copper-zinc alloy.

15. The method for preparing an electrode wire for electrical discharge machining according to claim 13, wherein:
in step S204, the heat treatment temperature is 300-550°C, the heat treatment duration is 1-50 h, and the material of the intermediate layer formed comprises a β-phase copper-zinc alloy and/or β' -phase copper-zinc alloy.

16. A method for preparing an electrode wire for electrical discharge machining, comprising:
S300: providing mother-bar made of pure copper or a copper alloy;
S301: electroplating zinc on the surface of the mother-bar, and an electroplating solution comprises an additive, thereby forming a zinc coating layer on the surface of the mother-bar to obtain a first wire blank; wherein the additive comprises a saccharide organic compound, and the electroplating current density range is 5-150 A/dm²;
S302: drawing the first wire blank to obtain a second wire blank;
S303: heat-treating the second wire blank, wherein the copper element from the mother-bar and the zinc element from the zinc coating layer interdiffuse during the heat treatment to form an intermediate layer, thereby obtaining a third wire blank; from inside to outside, the third wire blank sequentially comprises a core material, an intermediate layer, and a surface layer;
S304: subjecting the third wire blank to drawing and stress relief annealing to obtain a finished electrode wire.

17. The method for preparing an electrode wire for electrical discharge machining according to claim 16, wherein:
in step S303, the heat treatment temperature is 200-500°C, the heat treatment duration is 1-50 h, and the material of the intermediate layer formed comprises at least one of the following materials: a β-phase copper-zinc alloy, a β'-phase copper-zinc alloy and a γ-phase copper-zinc alloy.

18. The method for preparing an electrode wire for electrical discharge machining according to any one of claims 11 to 17, wherein:
the concentration of the additive in the electroplating solution is 8-25 g/L.

19. The method for preparing an electrode wire for electrical discharge machining according to any one of claims 11 to 17, wherein:
the saccharide organic compound comprises at least one of the following material: maltose, lactose, dextrin, and sucrose.
